# EUROPÄISCHE PATENTANMELDUNG

(11) **EP 1 434 062 A2**
(43) Veröffentlichungstag der Anmeldung: **30.06.2004**
(21) Anmeldenummer: 03029757.6
(22) Anmeldetag: 23.12.2003
(51) Int. Cl.: G01V 3/08

(54) **Verfahren zur Detektion von Metallgegenständen und Metalldetektor**

(30) Priorität: 27.12.2002 DE 10261258
(71) Anmelder: FIRMA ING. KLAUS EBINGER, D-51149 Köln (DE)
(72) Erfinder: Ebinger, Klaus, 51143 Köln (DE)
(74) Vertreter: Heim, Hans-Karl, Dipl.-Ing.

(57) **Zusammenfassung**

Die Erfindung betrifft ein Verfahren zur Detektion von Metallgegenständen, bei dem metallische Suchobjekte von einer Nachweiseinrichtung elektromagnetisch nachgewiesen werden, bei dem von der Nachweiseinrichtung abhängig zumindest von der Größe eines Suchobjekts ein variables Ausgangssignal ausgegeben wird und bei dem das Ausgangssignal von einer Umsetzeinrichtung in ein akustisches Signal umgesetzt wird. Das Verfahren ist erfindungsgemäß dadurch gekennzeichnet, dass mit einer Abgleicheinrichtung ein Arbeitspunkt eingestellt wird, dass zur Differenzierung der Suchobjekte entsprechend ihrer Größe Ausgangssignale ober- und unterhalb des Arbeitspunkts ausgegeben werden, Ausgangssignäle oberhalb des Arbeitspunkts in ein erstes akustisches Signal umgesetzt werden, Ausgangssignale unterhalb des Arbeitspunkts in ein zweites akustisches Signal umgesetzt werden und das erste akustische Signal und das zweite akustische Signal zur zuverlässigen akustischen Unterscheidung unterschiedlich gewählt werden. Die Erfindung betrifft ferner einen Metalldetektor.

## Beschreibung

Die Erfindung betrifft ein Verfahren zur Detektion von Metallgegenständen nach dem Oberbegriff des Anspruchs 1 und einen Metalldetektor nach dem Oberbegriff des Anspruchs 9.

Bei einem gattungsgemäßen Verfahren werden metallische Suchobjekte von einer Nachweiseinrichtung elektromagnetisch nachgewiesen. Weiterhin wird von der Nachweiseinrichtung abhängig zumindest von der Größe eines Suchobjekts ein variables Ausgangssignal ausgegeben und das Ausgangssignal wird von einer Umsetzeinrichtung in ein akustisches Signal umgesetzt.

Bei einem gattungsgemäßen Metalldetektor ist eine Nachweiseinrichtung zum elektromagnetischen Nachweis von Metallgegenständen vorgesehen, von welcher abhängig zumindest von der Größe eines Suchobjekts, ein variables Ausgangssignal ausgebbar ist. Weiterhin weist ein solcher Metalldetektor eine Umsetzeinrichtung auf, die mit der Nachweiseinrichtung zusammenwirkt und die das Ausgangssignal in ein akustisches Signal umsetzt.

Solche Verfahren und Metalldetektoren werden beispielsweise bei der Minensuche eingesetzt. Es ist bekannt, dass größere Panzerminen oftmals durch umgebende Schützenminen gesichert werden. Mit herkömmlicher Technik ist der Nachweis der Schützenminen nur dann möglich, wenn sie weit genug vom elektrischen Wirkungsbereich der Panzermine entfernt sind.

Detektoren in der Art eines Relativmessers verfügen nicht über das notwendige Auflösungsvermögen, um dieser Suchaufgabe gerecht zu werden.

Das Problem besteht darin, dass die Art der Unterscheidung sehr feinfühlig und sicher sein muss, um das gesuchte Objekt vom Störpegel unterscheiden zu können. Auch der Bedienungsaufwand des Detektors sollte so minimiert sein, dass der Bediener seine Aufmerksamkeit voll und ganz dem Gelände und dem Suchvorgang widmen kann. Die Sicherheit gegen Fehlbedienung, klare und empfindliche Indikation sowie eine permanente Funktionskontrolle sind wesentliche Aspekte bei derartigen Suchaufgaben.

Zwar ist beispielsweise aus DE 197 30 952 A1 ein Pulsinduktions-Verfahren bekannt, mit welchem sowohl eine Kompensation von Bodeneffekten als auch eine Objektanalyse möglich ist. Gleichwohl wird gerade für kritische Suchaufgaben nach Verbesserungen der bekannten Vorrichtungen und Verfahren gesucht. Beispielsweise müssen bei der humanitären Minenräumung Personenminen mit geringem Metallgehalt ("minimum amount of metal mine") unter schwierigsten Suchbedingungen aufgespürt werden. Mit herkömmlicher Technik können die zum Teil sehr kleinen Metallkomponenten der Minen, die sich darüber hinaus in laterisierten bzw. mineralisierten Böden befinden können, nur sehr schwierig nachgewiesen werden. Zur Unterdrückung bodenmagnetischer Effekte kann ein Pulsverfahren, wie es z.B. in DE 197 30 952 A1 beschrieben ist, eingesetzt werden.

Aus DE 199 01 174 C1 ist ein gattungsgemäßer Metalldetektor und eine gattungsgemäße Vorrichtung bekannt, bei denen die von den Suchobjekten ausgestrahlten Sekundärsignale in ein akustisches Nachweissignal umgesetzt werden. Dabei ist insbesondere vorgesehen, dass die Frequenz des akustischen Nachweissignals in Abhängigkeit des nachgewiesenen Sekundärsignals variiert wird.

Ein weiterer gattungsgemäßer Metalldetektor ist in EP 0 509 408 B1 beschrieben. Dort wird ebenfalls das Signal eines Suchoszillators in ein akustisches Signal umgesetzt, wobei Frequenz und/oder Amplitude mit sinkendem Abstand zum Objekt zunehmen, bis eine Sättigung erreicht ist. Zur besseren Ausnutzung des dynamischen Bereichs des Suchoszillators wird nach Erreichen der Sättigung das akustische Nachweissignäl abstandsabhängig moduliert, so dass eine weitere Annäherung akustisch aufgelöst und wahrgenommen werden kann. Weiterhin kann auch zur Feststellung der Größe eines Suchobjekts eine variable Tonmodulation erfolgen.

**Aufgabe** der Erfindung ist es, einen gattungsgemäßen Metalldetektor und ein gattungsgemäßes Verfahren anzugeben, mit welchen metallische Suchgegenstände einfacher und zuverlässiger aufgefunden und nach ihrer Größe unterschieden werden können.

Diese Aufgabe wird durch das Verfahren mit den Merkmalen des Patentanspruchs 1 und durch den Metalldetektor mit den Merkmalen des Patentanspruchs 9 gelöst.

Vorteilhafte Ausgestaltungen des erfindungsgemäßen Verfahrens und bevorzugte Ausführungsformen des erfindungsgemäßen Metalldetektors sind Gegenstand der Unteransprüche.

Das Verfahren der eingangs angegebenen Art ist erfindungsgemäß dadurch weitergebildet, dass mit einer Abgleicheinrichtung ein Arbeitspunkt eingestellt wird, dass zur Differenzierung der Suchobjekte entsprechend ihrer Größe Ausgangssignale ober- und unterhalb des Arbeitspunkts ausgegeben werden, Ausgangssignale oberhalb des Arbeitspunkts in ein erstes akustisches Signal umgesetzt werden, Aüsgangssignale unterhalb des Arbeitspunkts in ein zweites akustisches Signal umgesetzt werden und das erste akustische Signal und das zweite akustische Signal zur zuverlässigen akustischen Unterscheidung unterschiedlich gewählt werden.

Als Kerngedanke der Erfindung kann angesehen werden, dass über die ledigliche Variation des Ausgangssignals in Abhängigkeit von der Größe des Suchobjekts hinaus akustisch unterschiedliche Signale ausgegeben werden, je nachdem, ob das Ausganggssignal ober- oder unterhalb eines zu wählenden Arbeitspunkts liegt.

Als wesentlicher Vorteil des erfindungsgemäßen Verfahrens ist anzusehen, dass metallische Suchobjekte mit unterschiedlichen Größen besonders zuverlässig von einem Nutzer aufgespürt werden können. Das Risiko, Metallgegenstände, wie beispielsweise kleine und kleinste Metallkomponenten von Minen, zu "übersehen", kann auf diese Weise deutlich reduziert und die Sicherheit damit erhöht werden.

Besonders zuverlässig kann eine Selektion der Suchobjekte entsprechend ihrer Größe von der Nachweiseinrichtung aufgrund einer Abklingzeit eines nachgewiesenen elektromagnetischen Signals durchgeführt werden. Eine solche Selektion wird beispielsweise bei dem nachstehend im Zusammenhang mit dem erfindungsgemäßen Metalldetektor genauer beschriebenen Pulsinduktions-Verfahren durchgeführt, mit dem darüber hinaus auch Bodeneffekte kompensiert werden können.

Bei einer besonders einfachen Ausgestaltung des erfindungsgemäßen Verfahrens weist das erste akustische Signal eine erste Frequenz und das zweite akustische Signal eine zweite, von der ersten verschiedene Frequenz auf.

Dadurch kann in besonders einfacher und dabei zuverlässiger Weise eine Größendifferenzierung der Suchobjektve bezüglich eines vor dem Suchvorgang einzustellenden Arbeitspunkts erzielt werden.

Eine genauere Größendifferenzierung der Suchobjekte wird bei einer Verfahrensvariante ermöglicht, bei der die Frequenz des ersten akustischen Signals mit zunehmender Differenz des Ausgangssignals vom Arbeitspunkt ansteigt und/oder bei der die Frequenz des zweiten akustischen Signals mit zunehmender Differenz des Ausgangssignals vom Arbeitspunkt absinkt. Da das menschliche Ohr relative Frequenzänderungen sehr genau wahrnehmen kann, werden bei dieser Verfahrensvariante sehr zuverlässige Suchresultate erzielt.

Eine weitere Erhöhung der Nachweissicherheit kann erzielt werden, wenn die Amplitude des ersten und/oder des zweiten akustischen Signals mit zunehmender Differenz des Ausgangssignals von dem Arbeitspunkt ansteigt. Dies erweist sich insbesondere als nutzbringend, wenn Personenminen mit geringem Metallgehalt, d.h. mit kleinen und kleinsten Metallkomponenten aufgespürt werden müssen.

Bevorzugt ist die Nachweiseinrichtung so aufgebaut, dass ein Spannungssignal als Ausgangssignal geliefert wird, wobei als Arbeitspunkt zweckmäßig eine Spannung von null Volt gewählt wird. Eine Differenzierung der Ausgangssignale oberhalb bzw. unterhalb des Arbeitspunkts kann dann auf eine schaltungstechnisch einfach zu realisierende Differenzierung je nach Polarität des Signals zurückgeführt werden.

Bei manchen Suchaufgaben besteht die Problemstellung, dass Suchgegenstände von sehr unterschiedlicher Größe aufgespürt werden müssen. Es kann dann erwünscht sein, einen dynamischen Bereich der Nachweiseinrichtung voll auszunutzen. Zweckmäßig wird dann das erste akustische Signal und/oder das zweite akustische Signal mit einem, insbesondere frequenzvariablen, Modulationssignal moduliert.

Beispielsweise kann dann dem akustischen Nachweissignal bei Erreichen einer oberen oder unteren Sättigungsfrequenz ein Modulationssignal aufgeprägt werden, welches das akustische Nachweissignal in der Frequenz und/oder der Amplitude moduliert. Die Frequenz der Modulation kann dabei variabel und insbesondere ein Maß für die Größe und/oder die Entfernung des Suchobjekts sein.

Ein Metalldetektor der oben angegebenen Art ist erfindungsgemäß dadurch weitergebildet, dass zur Einstellung der Nachweiseinrichtung auf einen Arbeitspunkt eine Abgleicheinrichtung in Wirkverbindung mit der Nachweiseinrichtung und der Umsetzeinrichtuhg vorgesehen ist, dass zur Differenzierung der Suchobjekte nach Ihrer Größe Ausgangssignale oberhalb bzw. unterhalb des Arbeitspunkts erzeugbar sind, dass die Umsetzeinrichtung zur Differenzierung der Suchobjekte entsprechend ihrer Größe ausgebildet ist, wobei Ausgangssignale oberhalb des Arbeitspunkts in ein erstes akustisches Signal umsetzbar sind, wobei Ausgangssignale unterhalb des Arbeitspunkts in ein zweites akustisches Signal umsetzbar sind und wobei das erste und das zweite akustische Signal zur zuverlässigen akustischen Differenzierung unterschiedlich gewählt sind.

Als Kerngedanke der Erfindung kann angesehen werden, dass bei der Umsetzung des von der Nachweiseinrichtung gelieferten Ausgangssignals von einem Arbeitspunkt ausgegangen wird und dass zur größenmäßigen Differenzierung der Suchobjekte die Ausgangssignale in ein erstes akustisches Signal bzw. ein zweites akustisches Signal umgesetzt werden, je nachdem ob sie oberhalb oder unterhalb des Arbeitspunkts liegen.
Der Arbeitspunkt, der beispielsweise einer bestimmten Größe und/oder Entfernung eines Suchgegenstands entsprechen kann, kann dabei prinzipiell beliebig gewählt werden.

Im Vergleich zum Stand der Technik wird bei dem erfindungsgemäßen Metalldetektor der Vorteil erreicht, dass als Nachweischarakteristik nicht nur beispielsweise die absolute Höhe der Frequenz oder die Amplitude, sondern auch die relative Lage des Ausgangssignals relativ zu einem vor dem Suchvorgang einzustellenden Arbeitspunkt ausgenutzt wird.
Da relative Tonänderungen von einem Benutzer sehr genau festgestellt werden können, erlaubt der erfindungsgemäße Metalldetektor eine sehr zuverlässige größenmäßige Unterscheidung von Suchobjekten.

Mit Hilfe der Abgleicheinrichtung kann vor Beginn des eigentlichen Suchvorgangs die Nachweiseinrichtung abgeglichen werden, bodenmagnetische Effekte können kompensiert werden und ein Arbeitspunkt des Ausgangssignals kann auf diese Weise festgelegt werden.

Prinzipiell können sich das erste akustische Signal und das zweite akustische Signal in ihrer Frequenz und/oder in ihrer Amplitude unterscheiden.

Bei einer ersten bevorzugten Variante des erfindungsgemäßen Metalldetektors weist beispielsweise das erste akustische Signal eine feste erste Frequenz und das zweite akustische Signal eine feste zweite Frequenz auf. Auf diese Weise kann eine besonders zuverlässige größenmäßige Differenzierung der Suchobjekte relativ zu einem vor dem Suchvorgang gewählten Arbeitspunkt erzielt werden.

Eine präzisere Zuordnung des ersten und/oder zweiten akustischen Signals zur Größe des Suchobjekts wird bei einer weiteren Variante des erfindungsgemäßen Metalldetektors ermöglicht, bei der die Umsetzeinrichtung so ausgebildet ist, dass die Frequenz des ersten akustischen Signals mit zunehmender Differenz des Ausgangssignals vom Arbeitspunkt ansteigt und/oder bei der die Frequenz des zweiten akustischen Signals mit zunehmender Differenz des Ausgangssignals vom Arbeitspunkt absinkt.

Prinzipiell sind zwar Schaltungen möglich, bei denen die Umsetzeinrichtung unmittelbar vom ersten akustischen Signal auf das zweite akustische Signal umschaltet, sobald das Ausgangssignal der Nachweiseinrichtung den Arbeitspunkt durchläuft, bevorzugt ist die Umsetzeinrichtung aber so ausgebildet, dass das erste und/oder das zweite akustische Signal nur ausgegeben wird, wenn das Ausgangssignal oberhalb eines oberen Schwellwerts oder unterhalb eines unteren Schwellwerts liegt. Auf diese Weise kann beispielsweise erreicht werden, dass nur Suchobjekte mit einer gewissen Mindest- oder Maximalgröße nachgewiesen werden. In diesem Zusammenhang ist insbesondere bevorzugt, bei dem Metalldetektor entsprechende Einrichtungen zum definierten Einstellen des oberen und/oder des unteren Schwellwerts vorzusehen.

Um noch eine bessere akustische Differenzierung des akustischen Signals zu ermöglichen, ist bei einer weiteren vorteilhaften Ausgestaltung des Metalldetektors die Umsetzeinrichtung so ausgebildet, dass die Amplitude des ersten und/oder des zweiten akustischen Signals mit zunehmender Differenz des Ausgangssignals von dem Arbeitspunkt ansteigt.

Schließlich kann eine weitere Verbesserung der akustischen Differenzierung dadurch erzielt werden, dass bei dem ersten akustischen Signal und/oder bei dem zweiten akustischen Signal eine Modulation der Amplitude und/oder der Frequenz vorgesehen ist, wobei diese Modulation insbesondere in Abhängigkeit des Ausgangssignals erfolgt.

Beispielsweise können bei dem ersten akustischen Signal und dem zweiten akustischen Signal unterschiedliche Modulationsfrequenzen vorgesehen sein.

Um einem Nutzer akustisch anzudeuten, dass sich das Ausgangssignal der Nachweiseinrichtung von dem Arbeitspunkt entfernt, kann die Schaltung des Metalldetektors so ausgebildet sein, dass die Modulationsfrequenz des ersten und/oder des zweiten akustischen Signals mit der Differenz des Ausgangssignals vom Arbeitspunkt ansteigt.

Da das menschliche Ohr relative Frequenz- und Amplitudenänderungen sehr präzise wahrnehmen kann, kann es zweckmäßig sein, dass von der Umsetzeinrichtung ein akustisches Normsignal mit vorbestimmter Amplitude und Frequenz ausgebbar ist, wenn das Ausgangssignal dem Arbeitspunkt entspricht oder wenn das Ausgangssignal zwischen dem oberen und unteren Schwellwert liegt.

Zweckmäßig wird dabei das akustische Normsignal so gewählt, dass es eine Frequenz zwischen der Frequenz des ersten akustischen Signals und der Frequenz des zweiten akustischen Signals aufweist.

Bei einer besonders bevorzugten Ausführungsform des erfindungsgemäßen Metalldetektors ist die Nachweiseinrichtung als Pulsinduktions-Einrichtung ausgebildet. Mit solch einer Pulsinduktions-Einrichtung, die auch als PI-Einrichtung bezeichnet werden kann, kann eine Kompensation von bodenmagnetischen Effekten durchgeführt werden, die im Wesentlichen darin besteht, dass die bodenmagnetische Rückwirkung mindestens zu zwei Zeitpunkten mittels Samplingpulsen untersucht und ausgewertet wird. Die zeitlich verschobenen Messwerte, die im Allgemeinen durch Integration des Sekundärsignals über eine festzulegende Integrationszeit gewonnen werden, werden als Differenzwerte so aufbereitet, dass über dem störenden Medium ein Ruhezustand eintritt. Wenn sich die Abklingzeit des untersuchten Mediums durch andersartige Leitfähigkeitseffekte, beispielsweise durch ein metallisches Störobjekt, ändert, entsteht ein unterschiedliches elektromagnetisches Nachweissignal, im Allgemeinen eine von der Abklingzeit abhängende Plus-/Minus-Ausgangsspannung, welche als Ortungssignal aufgenommen und zur Anzeige gebracht wird. Es kann somit anhand der Abklingzeiten der detektierten Signale eine Selektion der nachzuweisenden Objekte erfolgen.

Bodenmagnetische Effekte führen in der Regel zu lang abklingenden Sekundärsignalen. Demgegenüber können kleine und kleinste Metallkomponenten, wie sie beispielsweise in Minen vorkommen, kurze Antwortsignale bewirken. Schließlich können lange Antwortsignale auch von Minen mit größerem Metallgehalt, von Splittern und von Drähten generiert werden.

Mit Hilfe des erfindungsgemäßen Metalldetektors können diese unterschiedlichen metallischen Objekte in einer für den Nutzer sehr leicht wahrnehmbaren Weise und damit sehr zuverlässig akustisch nach ihrer Größe unterschieden werden. Beispielsweise ermöglicht die erfindungsgemäße Vorrichtung und das erfindungsgemäße Verfahren die Unterscheidung einer FROG bzw. einer A72 von einem größeren Metallkörper.

Schaltungstechnisch besonders einfach realisierbar ist eine Ausführungsform der Erfindung, bei der die Abgleicheinrichtung zur Einstellung eines Nullniveaus als Arbeitspunkt ausgebildet ist.

Zweckmäßig ist weiterhin eine Einrichtung vorgesehen, mit welcher dieser Abgleich, der auch als Zwangsabgleich bezeichnet werden kann, automatisch, beispielsweise durch Betätigung einer Schalteinrichtung, insbesondere eines Druckknopfs, durchführbar ist. Aufwändige und zu Ungenauigkeiten führende manuelle Abgleichvorgänge können dann entfallen.

Beispielsweise kann das erste akustische Signal bei Annäherung an ein Suchobjekt mit einer relativ kleinen Größe und das zweite akustische Signal bei Annäherung an ein Suchobjekt mit einer relativ großen Größe ausgegeben werden.

Als besonders vorteilhaft hat sich in diesem Zusammenhang ein Metalldetektor erwiesen, bei welchem bei Annäherung an ein Suchobjekt mit einer relativ kleinen Größen das erste akustische Signal mit im Vergleich zum akustischen Normsignal erhöhter Frequenz und Amplitude erzeugbar ist und bei welchem bei Annäherung an ein Suchobjekt mit einer relativ großen Größe das zweite akustische Signal mit im Vergleich zum akustischen Normsignal erniedrigter Frequenz und erhöhter Amplitude erzeugbar ist. Mit einem solchen Metalldetektor können wegen des Anstiegs von Amplitude und Frequenz bei kleinen Suchobjekten Personenminen mit geringem Metallgehalt ("minimum amount of metal mine"), die kleine und kleinste Metallkomponenten aufweisen, besonders zuverlässig aufgespürt werden.

Um über die einfache Arbeitspunktinformation hinaus noch weitere quantitative Informationen zur Verfügung zu stellen, sind dabei zweckmäßig die Nachweiseinrichtung und die Umsetzeinrichtung so ausgebildet, dass die Frequenzabweichung und/oder die Amplitudenabweichung des ersten und/oder des zweiten akustischen Signals von dem akustischen Normsignal und/oder die Modulationsfrequenz ein Maß für die Größe des Suchobjekts ist. Hierbei kann die Umsetzung des Nachweissignals in das akustische Signal bezüglich Frequenz und/oder Amplitude stufenlos erfolgen. Prinzipiell kann aber auch die Frequenz, die Amplitude und/oder die Modulationsfrequenz des ersten und/oder des zweiten akustischen Signals selbst ein Maß für die Größe des Suchobjekts sein.

Schaltungstechnisch kann dies auf Seiten der Umsetzeinrichtung in einfacher Weise dadurch erzielt werden, dass zur Erzeugung frequenzvariabler akustischer Signale mindestens ein steuerbarer, insbesondere spannungsabhängiger, Oszillator vorgesehen ist.

Die Erzeugung akustischer Signale fester Frequenz erfolgt zweckmäßig mit Hilfe von mindestens einem, bevorzugt aber zwei Frequenzgeneratoren, die beispielsweise als Teil der Umsetzeinrichtung vorgesehen sein können.

Zur Bereitstellung eines in der Amplitude variablen akustischen Signals kann die Umsetzeinrichtung weiterhin mindestens einen steuerbaren, insbesondere spannungsabhängigen, Verstärker aufweisen. Zur Ansteuerung dieses Verstärkers ist zweckmäßig mindestens ein invertierender und/oder ein nichtinvertierender Verstärker vorgesehen. Mit diesen Bauelementen kann eine Umsetzeinrichtung mit der erfindungsgemäßen Funktionalität kostengünstig und funktionssicher aufgebaut werden.

Wenn Suchgegenstände von sehr unterschiedlicher Größe aufgespürt werden müssen und deshalb ein volle Ausnutzung des dynamischen Bereichs der Nachweiseinrichtung erwünscht ist, kann zweckmäßig an dem Metalldetektor eine mit der Nachweiseinrichtung und der Umsetzeinrichtung zusammenwirkende Modulationseinrichtung zur Erzeugung eines insbesondere frequenzvariablen und/oder amplitudenvariablen Modulationssignals vorgesehen sein.

Weitere Vorteile und Eigenschaften des erfindungsgemäßen Verfahrens und des erfindungsgemäßen Metalldetektors werden nachstehend unter Bezugnahme auf die beigefügten schematischen Figuren beschrieben.

Dort zeigt
- Fig. 1: eine schematische Teildarstellung eines ersten Ausführungsbeispiels eines erfindungsgmäßen Metalldetektors;
- Fig. 2: eine schematische Darstellung der Frequenz- und Amplitudenabhängigkeit des akustischen Signals von einer Größe des Suchobjekts bei dem Metalldetektor aus Figur 1;
- Fig. 3: eine schematische Teildarstellung eines zweiten Ausführungsbeispiels eines erfindungsgemäßen Metalldetektors; und
- Fig. 4: eine schematische Darstellung des Amplitudenverlaufs des ersten und zweiten akustischen Signals in Abhängigkeit der Größe des Suchobjekts bei dem Metalldetektor aus Fig. 3.

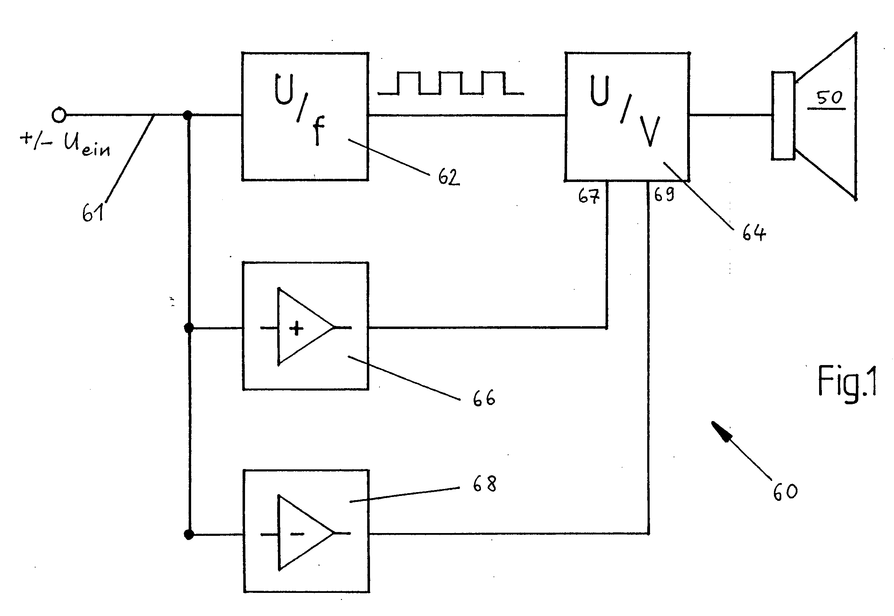

In Fig. 1 sind Details einer Umsetzeinrichtung 60 eines ersten Ausführungsbeispiels eines erfindungsgemäßen Metalldetektors schematisch dargestellt. Ein Eingang 61 der Umsetzeinrichtung 60, dem ein Ausgangssignal einer Nachweiseinrichtung zugeführt wird, ist parallel mit einem spannungsabhängigen Oszillator 62 sowie mit einem nichtinvertierenden Verstärker 66 und einem invertierenden Verstärker 68 verbunden. Der Ausgang des spannungsabhängigen Oszillators 62 ist mit dem Eingang eines spannungsabhängigen Verstärkers 64 verbunden, der von dem nichtinvertierenden Verstärker 66 und dem invertierenden Verstärker 68 gesteuert wird. Der Ausgang des spannungsabhängigen Verstärkers schließlich ist mit einem Lautsprecher 50 verbunden.

Die Umsetzeinrichtung 60 arbeitet wie folgt:

Am Eingang 61 steht im Ruhezustand eine Spannung von null Volt an. Der U/f-Wandler 62 erzeugt bei null Volt Eingangsspannung, d.h. beim Arbeitspunkt, eine Grundfrequenz, die der spannungsgesteuerte Verstärker 64 in einen leisen Grundton umwandelt und an den Piezo-Lautsprecher 50 weitergibt. Bei Anwesenheit von kleinen Suchobjekten, welche zu einem kurz abklingenden Signal führen, steigt die Eingangsspannung an und der Spannungsfrequenzwandler 62 erzeugt nun eine proportional zur Eingangsspannung höhere Frequenz. Gleichzeitig verstärkt der nichtinvertierende Verstärker 66 die Eingangsspannung und leitet sie an einen ersten Steuereingang 67 des spannungsabhängigen Verstärkers 64 weiter. Dieser verstärkt nur dann ein Eingangssignal, wenn entweder der erste Steuereingang 67 oder ein zweiter Steuereingang 69, der mit dem Ausgang des invertierenden Verstärkers 68 verbunden ist, positiv wird. Die Höhe der an den Eingängen 67, 69 anliegenden Steuerspannung ist ein Maß für die Verstärkung des spannungsabhängigen Verstärkers 64. In dem vorstehend beschriebenen Fall verstärkt der spannungsabhängige Verstärker 64 also eine in Bezug zur Grundfrequenz höhere Frequenz.

Bei größeren Metallobjekten, welche zu einem lang abklingenden Signal führen, fällt die am Eingang 61 anliegende Eingangsspannung ab und der spannungsabhängige Oszillator 62 erzeugt nun eine niedrigere Frequenz. Gleichzeitig verstärkt der invertierende Verstärker 68 die negative Spannung, wandelt sie in eine positive Spannung um und gibt diese auf den zweiten Steuereingang 69 des spannungsabhängigen Verstärkers 64. Die Verstärkung des spannungsabhängigen Verstärkers 64 steigt dann an und der Verstärker 64 verstärkt in diesem Fall eine im Vergleich zur Grundfrequenz, d.h. zur Frequenz des akustischen Normsignäl, niedrigere Frequenz.

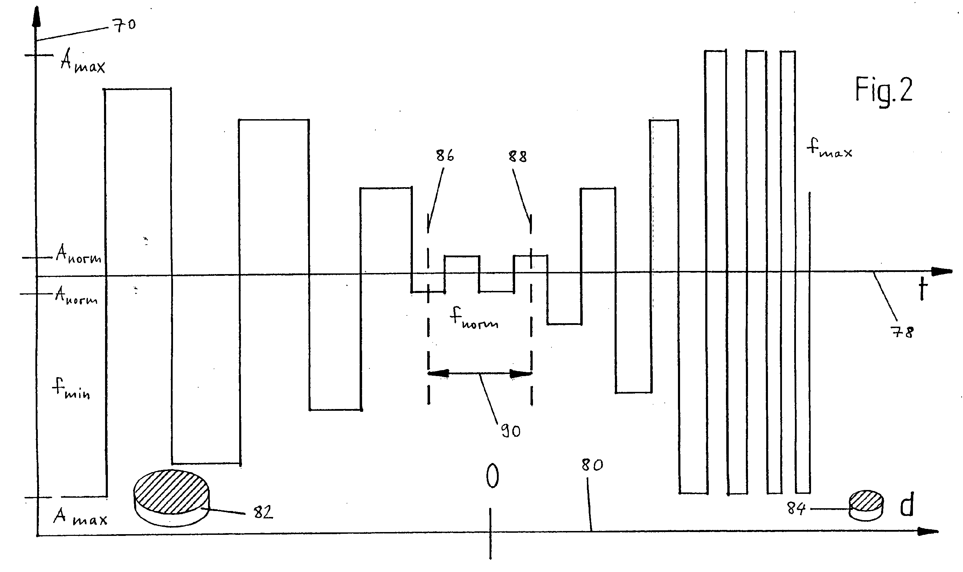

Diese Zusammenhänge sind in Figur 2 nochmals schematisch dargestellt. Dort ist schematisch ein Frequenz- und Amplitudenverlauf gegenüber der Größe der nachzuweisenden Metallobjekte gezeigt. Eine Y-Achse 70 repräsentiert die Amplitude des ersten und zweiten akustischen Signals, welche schematisch gegenüber der Größe des Objekts, welche auf einer X-Achse 80 dargestellt ist, aufgetragen ist. Weiterhin ist zur schematischen Darstellung des Frequenzverlaufs eine zweite X-Achse 78 als Zeitachse gezeigt. In dem durch den Doppelpfeil 90 und die gestrichelten, einem unteren bzw. einem oberen Schwellwert entsprechenden Linien 86, 88 angedeuteten Bereich wird von der Umsetzeinrichtung 60 ein akustisches Signal mit einer Amplitude Aₙₒᵣₘ und einer Frequenz fₙₒᵣₘ ausgegeben.

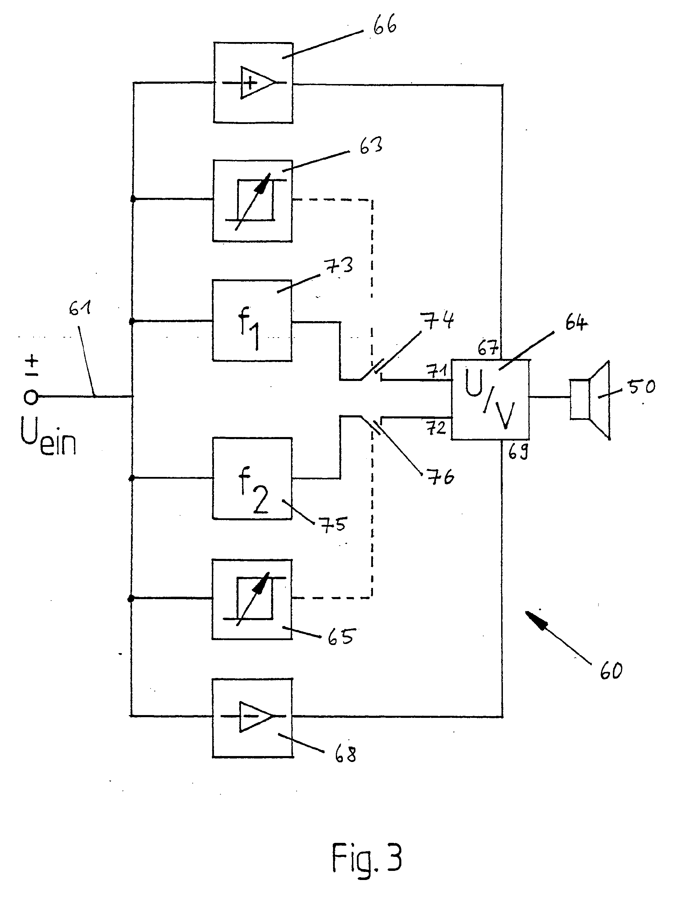

Wenn ein kleines Objekt, wie es in Figur 3 schematisch durch das Bezugszeichen 84 dargestellt ist, in den Detektionsbereich des erfindungsgemäß Metalldetektors gelangt, steigt die Frequenz und die Amplitude des ersten akustischen Signals in Abhängigkeit der Größe des nachzuweisenden Objekts 84 an. Maximal kann dabei eine Frequenz von fₘₐₓ und eine Amplitude von Aₘₐₓ erreicht werden.

Gelangt dagegen ein vergleichweise großes Objekt 82 in den Nachweisbereich des erfindungsgemäßen Metalldetektors, sinkt die Frequenz des von der Umsetzeinrichtung 60 ausgegebenen zweiten akustischen Signals, wobei aber die Amplitude wiederum ansteigt. Die Frequenz des zweiten akustischen Signals kann dabei bis auf eine Frequenz von fₘᵢₙ absinken und die Amplitude wiederum auf einen Wert von maximal Aₘₐₓ ansteigen.

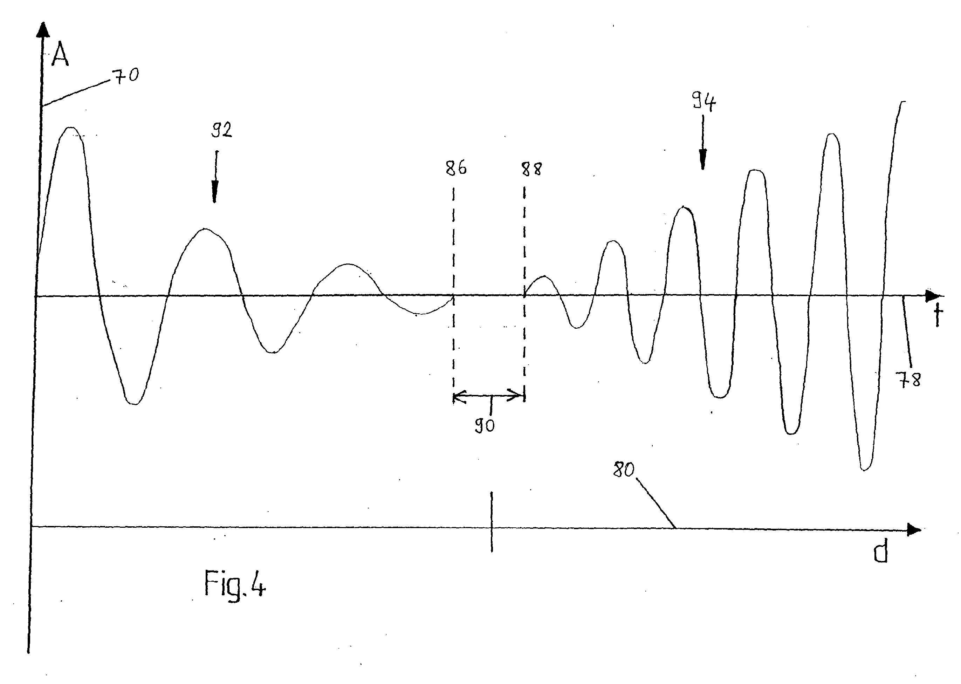

Ein weiteres Ausführungsbeispiel einer erfindungsgemäßen setzeinrichtung 60 ist schematisch in Fig. 3 dargestellt. Ein Amplitudenverlauf für die Umsetzeinrichtung 60 aus Fig. 3 ist in Fig. 4 gezeigt. Entsprechende Komponenten in den Fig. 1 und 2 bzw. 3 und 4 sind mit denselben Bezugszeichen gekennzeichnet.

Ein Eingang 61 der Umsetzeinrichtung 60, dem wiederum ein Ausgangssignal einer Nachweiseinrichtung des erfindungsgemäßen Metalldetektors zugeführt wird, ist parallel mit einem nicht-invertierenden Verstärker 66 und einem invertierenden Verstärker 68 verbunden. Statt des spannungsabhängigen Oszillators 62 aus Fig. 1 sind bei dem in Fig. 3 gezeigten Beispiel der Umsetzeinrichtung 60 Komparatoren 63, 65 sowie Spannungsgeneratoren 73, 75 vorgesehen, deren Eingänge ebenfalls parallel mit dem Eingang 61 verbunden sind. Die Ausgänge des nicht-invertierenden Verstärkers 66 und des invertierenden Verstärkers 68 sind auf Steuereingänge 67 bzw. 69 eines spannungsabhängigen Verstärkers 64 geführt. Der Ausgang dieses spannungsabhängigen Verstärkers 64 ist mit einem Lautsprecher 50 verbunden.

Die Ausgänge der Frequenzgeneratoren 73, 75 sind über Schalteinrichtungen 74, 76, bei denen es sich beispielsweise um einfache Transistorstufen handeln kann, den Verstärkereingängen 71, 72 des spannungsabhängigen Verstärkers 64 verbunden. Die Ausgänge der Komparatoren 63, 65 sind mit den Steuereingängen der Schalteinrichtungen 74, 76 verbunden.

Die in Fig. 3 gezeigte Umsetzeinrichtung arbeitet folgendermaßen:

Am Eingang 61 steht wiederum im Ruhezustand eine Spannung von 0 Volt an. Keiner der beiden Komperatoren 63, 65 spricht an, so dass beide Schalteinrichtungen 74, 76 offen sind, dem spannungsabhängigen Verstärker 64 entsprechend kein Signal zur Verstärkung zugeführt wird und der Lautsprecher 50 folglich kein akustisches Signal abgibt.

Gelangt ein kleines Suchobjekt in den Detektionsbereich des Metalldetektors, steigt die am Eingang 61 anliegende Spannung an. Diese am Eingang 61 anliegende positive Spannung wird von den Komperatoren 63, 65 mit einem jeweils einzustellenden oberen bzw. unteren Schwellwert verglichen. Wenn die am Eingang 61 anliegende Spannung größer als der beim Komperator 63 eingestellte obere Schwellwert ist, schaltet der Komperator 63 durch und steuert die Schalteinrichtung 74 in den geschlossenen Zustand. Dies führt wiederum dazu, dass der Ausgang des Frequenzgenerators 73, der im vorliegend gewählten Beispiel eine Sinusfrequenz von etwa 800 Hz erzeugt, dem Eingang 71 des spannungsabhängigen Verstärkers 64 zugeführt wird. Abhängig von der Größe der am Eingang 61 anliegenden Spannung, die über den nicht-invertierenden Verstärker 66 verstärkt und dem Eingang 67 des spannungsabgängigen Verstärkers 64 zugeführt wird, verstärkt der spannungsabhängige Verstärker 64 nunmehr die am Eingang 71 anliegende Sinusfrequenz von etwa 800 Hz.

Durch den Lautsprecher 50 wird dieses erste akustische Signal für einen Benutzer wahrnehmbar gemacht.

Eine entsprechende Funktionalität ergibt sich bei negativen Spannungen. Wenn in diesem Fall die Spannung negativer wird als ein beim Komperator 65 eingestellter unterer Schwellwert, schaltet dieser Komperator 65 durch und steuert die Schalteinrichtung 76 in den geschlossenen Zustand.

Dann gelangt eine von dem Frequenzgenerator 75 bereitgestellte Sinusfrequenz von etwa 400 Hz an den Eingang 72 des spannungsabhängigen Verstärkers 64. Abhängig von der Größe der dann am Eingang 61 anliegenden negativen Spannung, die von dem invertierenden Verstärker 68 verstärkt und über den Eingang 69 dem spannungsabhängigen Verstärker 64 zugeführt wird, verstärkt der spannungsabhängige Verstärker 64 das Sinussignal von 400 Hz.

Wiederum wird das so verstärkte Signal von dem Lautsprecher 50 als zweites akustisches Signal zur Wahrnehmung gebracht.

Der Amplitudenverlauf für das in Fig. 3 dargestellte Beispiel einer erfindungsgemäßen Umsetzeinrichtung 60 ist in Fig. 4 schematisch gezeigt.

Entsprechend der Darstellung in Fig. 2 ist dort die Amplitude A auf der vertikalen Achse schematisch gegenüber der Zeit t als erster X-Achse 78 und der Objektgröße d als zweiter X-Achste 80 aufgetragen. Die Objektgröße nimmt dabei von links nach rechts ab.

Gelangt ein kleines Objekt in den Detektionsbereich des Metalldetektors und ist die von der Nachweiseinrichtung ausgegebene Spannung größer als ein oberer Schwellwert, wird von der Umsetzeinrichtung 60 ein erstes akustisches Signal 94 mit einer Frequenz von etwa 800 Hz ausgegeben. Mit zunehmender Ausgangsspannung der Nachweiseinrichtung steigt, wie im rechten Bereich von Fig. 4 ersichtlich, die Amplitude des ersten akustischen Signals an.

Entsprechend wird bei negativer Ausgangsspannung der Nachweiseinrichtung, d. h. bei relativ großen Suchobjekten ein zweites akustisches Signal mit einer Frequenz von etwa 400 Hz ausgegeben. Wiederum steigt mit zunehmender Entfernung des Ausgangssignals vom Arbeitspunkt, d. h. von 0 Volt, die Amplitude des zweiten akustischen Signals 92 an. Dies ist im linken Bereich in Fig. 4 gezeigt.

Da die Änderungen in der Frequenz und der Amplitude des akustischen Signals von einem Nutzer sehr präzise und deutlich wahrgenommen werden können, kann insgesamt die Nachweissicherheit und die Unterscheidung von Nachweisobjekten unterschiedlicher Größe mit dem erfindungsgemäßen Metalldetektor und dem erfindungsgemäßen Verfahren deutlich verbessert werden.

Die Erfindung besteht also darin, ein erstes und ein zweites akustisches Signal, in einem einfachen Fall zwei Töne, mit denen man in den meisten Fällen den Störpegel vom Nutzsignal, also kritische, kurz abklingende Minen unterscheiden kann, zur Größenunterscheidung heranzuziehen.

Dieses Verfahren kann in vielfältiger Weise realisiert werden, wobei vorstehend im Zusammenhang mit den Fig. 1 und 2 ein "nahtlos schwimmendes" Verfahren mit unterdrücktem Grundton beschrieben wurde. Darüber hinaus wurde bezüglich der Fig. 3 und 4 ein Verfahren und ein entsprechender Metalldetektor mit einem "geschalteten Doppelton", d. h. zwei unterschiedlichen Frequenzen, die sich nicht in der Frequenz, sondern nur in der Amplitude ändern, beschrieben.

Die Grenze der Empfindlichkeit ist der Schwellenwert, der sich dem Rauschpegel nähert, der mit anderen Worten einen Null-Sektor bildet. Auf diese Weise wird dieser Null-Sektor akustisch völlig unterdrückt und ein Sucher wird nicht durch Nebentöne irritiert. Bevorzugt können für diese Art der Tonumsetzung akustisch angenehme Sinusspannungen gewählt werden.

## Patentansprüche

1. Verfahren zur Detektion von Metallgegenständen,
- bei dem metallische Suchobjekte von einer Nachweiseinrichtung elektromagnetisch nachgewiesen werden,
- bei dem von der Nachweiseinrichtung abhängig zumindest von der Größe eines Suchobjekts ein variables Ausgangssignal ausgegeben wird und
- bei dem das Ausgangssignal von einer Umsetzeinrichtung (60) in ein akustisches Signal umgesetzt wird,
**dadurch gekennzeichnet,**
- **dass** mit einer Abgleicheinrichtung ein Arbeitspunkt eingestellt wird,
- **dass** zur Differenzierung der Suchobjekte entsprechend ihrer Größe
-- Ausgangssignale ober- und unterhalb des Arbeitspunkts ausgegeben werden,
-- Ausgangssignale oberhalb des Arbeitspunkts in ein erstes akustisches Signal (94) umgesetzt werden,
-- Ausgangssignale unterhalb des Arbeitspunkts in ein zweites akustisches Signal (92) umgesetzt werden und
-- das erste akustische Signal (94) und das zweite akustische Signal (92) zur zuverlässigen akustischen Unterscheidung unterschiedlich gewählt werden.

2. Verfahren nach Anspruch 1,
**dadurch gekennzeichnet,**
**dass** von der Nachweiseinrichtung eine Selektion
der Suchobjekte entsprechend ihrer Größe aufgrund einer Abklingzeit eines nachgewiesenen elektromagnetischen Signals durchgeführt wird.

3. Verfahren nach einem der Ansprüche 1 oder 2,
**dadurch gekennzeichnet,**
**dass** das erste akustische Signal (94) eine erste Frequenz und das zweite akustische Signal (92) eine zweite, von der ersten verschiedene Frequenz aufweist.

4. Verfahren nach einem der Ansprüche 1 oder2,
**dadurch gekennzeichnet,**
**dass** die Frequenz des ersten akustischen Signals (94) mit zunehmender Differenz des Ausgangssignals vom Arbeitspunkt ansteigt und/oder
**dass** die Frequenz des zweiten akustischen Signals (92) mit zunehmender Differenz des Ausgangssignals vom Arbeitspunkt absinkt.

5. Verfahren nach einem der Ansprüche 1 bis 4,
**dadurch gekennzeichnet,**
**dass** die Amplitude des ersten und/oder des zweiten akustischen Signals (94, 92) mit zunehmender Differenz des Ausgangssignals vom Arbeitspunkt ansteigt.

6. Verfahren nach einem der Ansprüche 1 bis 5,
**dadurch gekennzeichnet,**
**dass** die Nachweiseinrichtung ein Spannungssignal
als Ausgangssignal liefert.

7. Verfahren nach einem der Ansprüche 1 bis 6,
**dadurch gekennzeichnet,**
**dass** als Arbeitspunkt eine Spannung von 0 Volt gewählt wird.

8. Verfahren nach einem der Ansprüche 1 bis 7,
**dadurch gekennzeichnet,**
**dass** zur Ausnutzung eines vollen dynamischen Bereichs der Nachweiseinrichtung das erste akustische
Signal und/oder das zweite akustische Signal (94, 92) mit einem, insbesondere frequenzvariablen, Modulationssignal moduliert wird.

9. Metalldetektor, insbesondere zur Durchführung des Verfahrens nach einem der Ansprüche 1 bis 8, mit
- einer Nachweiseinrichtung zum elektromagnetischen Nachweis von Metallgegenständen, von der, abhängig zumindest von der Größe eines Suchobjekts, ein variables Ausgangssignal ausgebbar ist und
- mit einer Umsetzeinrichtung (60), die mit der Nachweiseinrichtung zusammenwirkt und die das Ausgangssignal in ein akustisches Signal umsetzt,
**dadurch gekennzeichnet,**
- **dass** zur Einstellung der Nachweiseinrichtung auf einen Arbeitspunkt eine Abgleicheinrichtung in Wirkverbindung mit der Nachweiseinrichtung und der Umsetzeinrichtung vorgesehen ist,
- **dass** zur Differenzierung der Suchobjekte nach Ihrer Größe Ausgangssignale oberhalb bzw. unterhalb des Arbeitspunkts erzeugbar sind,
- **dass** die Umsetzeinrichtung (60) zur Differenzierung der Suchobjekte entsprechend ihrer Größe ausgebildet ist,
-- wobei Ausgangssignale oberhalb des Arbeitspunkts in ein erstes akustisches Signal (94) umsetzbar sind,
-- wobei Ausgangssignale unterhalb des Arbeitspunkts in ein zweites akustisches Signal (92) umsetzbar sind und
-- wobei das erste und das zweite akustische Signal (94, 92) zur zuverlässigen akustischen Differenzierung unterschiedlich gewählt sind.

10. Metalldetektor nach Anspruch 9,
**dadurch gekennzeichnet,**
**dass** das erste akustische Signal (94) eine feste erste Frequenz und das zweite akustische Signal (92) eine feste zweite, von der ersten verschiedene Frequenz aufweist.

11. Metalldetektor nach Anspruch 9,
**dadurch gekennzeichnet,**
**dass** die Umsetzeinrichtung (60) so ausgebildet ist, dass die Frequenz des ersten akustischen Signals (94) mit zunehmender Differenz des Ausgangssignals vom Arbeitspunkt ansteigt und/oder dass die Frequenz des zweiten akustischen Signals (92) mit zunehmender Differenz des Ausgangssignals vom Arbeitspunkt absinkt.

12. Metalldetektor nach einem der Ansprüche 9 bis 11,
**dadurch gekennzeichnet,**
**dass** die Umsetzeinrichtung (60) so ausgebildet ist, dass das erste und/oder das zweite akustische Signal (94, 92) nur ausgebbar ist, wenn das Ausgangssignal oberhalb eines oberen Schwellwerts oder unterhalb eines unteren Schwellwerts liegt.

13. Metalldetektor nach einem der Ansprüche 9 bis 12,
**dadurch gekennzeichnet,**
**dass** die Umsetzeinrichtung (60) so ausgebildet ist, dass die Amplitude des ersten und/oder des zweiten akustischen Signals (94, 92) mit zunehmender Differenz des Ausgangssignals vom Arbeitspunkt ansteigt.

14. Metalldetektor nach einem der Ansprüche 9 bis 13,
**dadurch gekennzeichnet,**
**dass** bei dem ersten akustischen Signal und/oder bei dem zweiten akustischen Signal (94, 92) eine Modulation der Amplitude und/oder der Frequenz vorgesehen ist.

15. Metalldetektor nach Anspruch 14,
**dadurch gekennzeichnet**,
das bei dem ersten akustischen Signal (94) und dem zweiten akustischen Signal (92) eine unterschiedliche Modulationsfrequenz vorgesehen ist.

16. Metalldetektor nach einem der Ansprüche 14 oder 15,
**dadurch gekennzeichnet,**
**dass** die Modulationsfrequenz des ersten und/oder des zweiten akustischen Signals (94, 92) mit der Differenz des Ausgangssignals vom Arbeitspunkt ansteigt.

17. Metalldetektor nach einem der Ansprüche 9 bis 16,
**dadurch gekennzeichnet,**
**dass** ein akustisches Normsignal mit vorbestimmter Amplitude und Frequenz ausgebbar ist, wenn das Ausgangssignal dem Arbeitspunkt entspricht oder
wenn das Ausgangssignal zwischen dem oberen und dem unteren Schwellwert liegt.

18. Metalldetektor nach Anspruch 17,
**dadurch gekennzeichnet,**
**dass** das akustische Normsignal eine Frequenz zwischen der Frequenz des ersten akustischen Signals und der Frequenz des zweiten akustischen Signals aufweist.

19. Metalldetektor nach einem der Ansprüche 9 bis 18,
**dadurch gekennzeichnet,**
**dass** die Nachweiseinrichtung (20) als Pulsinduktions-Einrichtung ausgebildet ist.

20. Metalldetektor nach einem der Ansprüche 9 bis 19,
**dadurch gekennzeichnet,**
**dass** die Abgleicheinrichtung zur Einstellung eines Nullniveaus als Arbeitspunkt ausgebildet ist.

21. Metalldetektor nach Anspruch 20,
**dadurch gekennzeichnet,**
**dass** ein Abgleich durch Betätigung einer Schalteinrichtung, insbesondere eines Druckknopfs, automatisch durchführbar ist.

22. Metalldetektor nach einem der Ansprüche 9 bis 21,
**dadurch gekennzeichnet,**
**dass** das erste akustische Signal (94) bei Annäherung an ein Suchobjekt mit einer relativ kleinen Größe ausgebbar ist und
**dass** das zweite akustische Signal (92) bei Annäherung an ein Suchobjekt mit einer relativ großen Größe ausgebbar ist.

23. Metalldetektor nach einem der Ansprüche 17 bis 22,
**dadurch gekennzeichnet,**
**dass** die Frequenzabweichung, die Amplitudenabweichung des ersten und/oder des zweiten akustischen Signals (94, 92) von dem akustischen Normsignal und/oder die Modulationsfrequenz ein Maß für die Größe des Suchobjekts ist.

24. Metalldetektor nach einem der Ansprüche 9 bis 23,
**dadurch gekennzeichnet,**
**dass** die Umsetzeinrichtung (60) zur Erzeugung frequenzvariabler akustischer Signale mindestens einen steuerbaren, insbesondere spannungsabhängigen, Oszillator (62) aufweist.

25. Metalldetektor nach einem der Ansprüche 9 bis 24,
**dadurch gekennzeichnet,**
**dass** die Umsetzeinrichtung (60) zur Erzeugung akustischer Signale fester Frequenz mindestens einen, insbesondere zwei Frequenzgeneratoren (73, 75) aufweist.

26. Metalldetektor nach einem der Ansprüche 9 bis 25,
**dadurch gekennzeichnet,**
**dass** die Umsetzeinrichtung (60) zur Bereitstellung amplitudenvariabler akustischer Signale mindestens. einen steuerbaren, insbesondere spannungsabhängigen, Verstärker (64) aufweist.

27. Metalldetektor nach Anspruch 26,
**dadurch gekennzeichnet,**
**dass** bei der Umsetzeinrichtung (60) zur Ansteuerung des steuerbaren Verstärkers (64) mindestens ein invertierender und/oder ein nichtinvertierender Verstärker (66, 68) vorgesehen ist.

28. Metalldetektor nach einem der Ansprüche 9 bis 27,
**dadurch gekennzeichnet,**
**dass** zur Ausnutzung eines vollen dynamischen Bereichs der Nachweiseinrichtung (20) eine mit der Nachweiseinrichtung (20) und der Umsetzeinrichtung (60) zusammenwirkende Modulationseinrichtung zur Erzeugung eines insbesondere frequenzvariablen und/oder amplitudenvariablen Modulationssignals vorgesehen ist.
